# EUROPÄISCHE PATENTSCHRIFT

(11) **EP 4 263 070 B1**
(45) Veröffentlichungstag und Bekanntmachung des Hinweises auf die Patenterteilung: **05.02.2025**
(21) Anmeldenummer: 21839472.4
(22) Anmeldetag: 15.12.2021
(51) Int. Cl.: B05B 12/04, B05B 12/12, B05B 13/04, G05B 19/19, G01B 11/04

(54) **ANLAGE ZUM BESCHICHTEN VON GEGENSTÄNDEN MIT BESCHICHTUNGSMATERIAL SOWIE VERFAHREN ZUM BESCHICHTEN VON GEGENSTÄNDEN MIT BESCHICHTUNGSMATERIAL**
UNIT FOR COATING OBJECTS WITH A COATING MATERIAL AS WELL AS METHOD FOR COATING OBJECTS WITH COATING MATERIAL
INSTALLATION POUR LE REVÊTEMENT D'OBJETS AVEC UN PRODUIT DE REVÊTEMENT AINSI QUE PROCÉDÉ POUR LE REVÊTEMENT D'OBJETS AVEC UN PRODUIT DE REVÊTEMENT

(30) Priorität: 18.12.2020 DE 102020134087
(43) Veröffentlichungstag der Anmeldung: 25.10.2023
(73) Patentinhaber: Gema Switzerland GmbH, 9200 Gossau (CH)
(72) Erfinder: FORSTER, Axel, 9032 Engelburg (CH); MLAKAR TRÜMPY, Roman, 8280 Kreuzlingen (CH); MAUCHLE, Felix, 9030 Abtwil (CH)
(74) Vertreter: Meissner Bolte Partnerschaft mbB
(86) Internationale Anmeldenummer: PCT/EP2021/085879
(87) Internationale Veröffentlichungsnummer: WO 2022/129165

(56) Entgegenhaltungen:
- EP-A1- 2 712 680
- EP-A2- 0 706 102
- DE-A1- 10 031 030
- US-A- 2 754 795
- US-A1- 2018 043 385

## Beschreibung

Die vorliegende Erfindung betrifft allgemein die Oberflächenbehandlung von Werkstücken und insbesondere das vorzugsweise automatische Beschichten von Werkstücken mit Beschichtungsmaterial, insbesondere Beschichtungspulver.

Gemäß einem Aspekt der vorliegenden Erfindung betrifft diese eine Anlage zum vorzugsweise automatischen Beschichten von Gegenständen mit Beschichtungsmaterial, insbesondere Beschichtungspulver, wobei die Anlage eine Beschichtungsstation mit mindestens einer Beschichtungspistole zum insbesondere bedarfsweisen Versprühen von Beschichtungsmaterial in Richtung eines Beschichtungsbereichs aufweist. Die Beschichtungsstation kann beispielsweise zumindest bereichsweise im Inneren einer Beschichtungskabine oder Beschichtungszelle vorgesehen sein.

Beschichtungskabinen oder Beschichtungszellen zum Beschichten von Werkstücken, insbesondere mit Beschichtungspulver, sind allgemein aus dem Stand der Technik bekannt. Derartige Beschichtungskabinen oder Beschichtungszellen weisen in der Regel eine Beschichtungskammer mit zwei einander gegenüberliegenden Werkstückdurchgängen auf. In der Regel ist der Beschichtungskabine oder Beschichtungszelle eine Fördervorrichtung zugeordnet zum insbesondere kontinuierlichen Transportieren von zu beschichtenden Gegenständen durch den Beschichtungsbereich der Beschichtungsstation.

Beispielweise betreffen die Druckschriften EP 0 706 102 A2, US 2018/043385 A1 und EP 2 712 680 A1 Beschichtungskabinen.

Beispielsweise betrifft die Druckschrift EP 0 071 756 A2 eine Beschichtungskabine mit einer Fördervorrichtung, welche die zu beschichtenden Gegenstände über einen Eingang und einen Ausgang durch den Kabineninnenraum transportiert. Über ein durch mindestens eine Tür zu öffnendes Wandelement kann mit Hilfe einer Sprühvorrichtung, beispielsweise in Gestalt einer Handsprühpistole, Beschichtungsmaterial bedarfsweise in Richtung des Beschichtungsbereichs im Inneren der Beschichtungskabine versprüht werden. Es können jedoch auch automatisch gesteuerte Sprühpistolen vorgesehen sein. Die mindestens eine Tür ermöglicht auch den Zugang in den Kabineninnenraum. Die Sprühpistolen können alle auf der gleichen Kabinenseite angeordnet sein. Es können auch auf der gegenüberliegenden Seite vorbereitete Wandelemente mit Schlitzen zum Hindurchführen von Sprühpistolen vorgesehen sein.

Anstelle einer Fördervorrichtung zum automatischen Transport der zu beschichtenden Gegenstände durch den Kabineninnenraum können die zu beschichtenden Gegenstände auch manuell in den Kabineninnenraum eingebracht und - nach einem Beschichtungsvorgang - wieder entfernt werden. Demnach soll der hierin verwendete Begriff "Fördervorrichtung" auch Vorrichtungen erfassen, mit denen ein zu beschichtender Gegenstand manuell durch den Beschichtungsbereich, der vorzugsweise zumindest bereichsweise im Inneren einer Beschichtungskabine oder Beschichtungszelle vorliegt, transportiert/gefördert wird.

Eine Fördervorrichtung zum automatischen Transport der zu beschichtenden Gegenstände durch den Kabineninnenraum kann insbesondere unterhalb des Kabinenbodens der Beschichtungskabine angeordnet sein und einen Werkstückträger aufweisen, welcher durch einen Förderschlitz im Kabinenboden in die Beschichtungskammer der Beschichtungskabine hineinragt.

Beschichtungskabinen mit derartigen "Flurförderern" werden insbesondere bei der Beschichtung von hochwertigen Werkstücken eingesetzt, da durch die Anordnung der Fördervorrichtung unterhalb des Kabinenbodens eine hohe Beschichtungsqualität erreicht werden kann. Dies liegt insbesondere darin begründet, dass "klassische" Förderer zum hängenden Transport von Werkstücken durch die Beschichtungskammer ein Herabfallen von Schmutzteilchen oder Pulverresten von der Fördervorrichtung begünstigen können, was zu Unregelmäßigkeiten in der Beschichtung führen kann.

Beim Beschichten von Werkstücken mit Beschichtungsmaterial, insbesondere Beschichtungspulver, besteht ein Bedarf dahingehend, insbesondere schon von vornhinein, d.h. bereits während des Beschichtungsvorgangs, etwaige Unregelmä-ßigkeiten in der Beschichtung oder Beschichtungsfehler zu vermeiden.

Um Unregelmäßigkeiten in der Beschichtung oder Beschichtungsfehler zu vermeiden oder zumindest zu minimieren sind insbesondere für Nasslackapplikationen verschiedene Ansätze bekannt. In der Regel ist bei diesen herkömmlichen Ansätzen vorgesehen, dass die Beschichtung meist erst nach dem Aushärten bzw. Verfestigen der Beschichtung korrigiert wird. Für eine solche nachträgliche, d.h. nach dem eigentlichen Beschichtungsvorgang, vorzunehmende Fehlerkorrektur sind in der Regel entsprechende Werkzeuge bzw. Werkzeugvorrichtungen von Nöten.

Aufgrund der für die Fehlerkorrektur verwendeten Werkzeuge bzw. Werkzeugvorrichtungen, wie sie beispielsweise in der Druckschrift DE 19 539 065 A1 vorgeschlagen werden, sind jedoch nur einfache Flächen ohne komplexe geometrische Umformungen korrigierbar.

Im Einzelnen muss beispielsweise das in der Druckschrift DE 19 539 065 A1 vorgeschlagene Werkzeug auf die Oberfläche des bereits beschichteten Gegenstands aufgesetzt werden, so dass für einen Beschichtungsfehler, der beispielsweise in einer Umformfläche liegt, das Werkzeug auf die jeweilige Fläche angepasst werden müsste, was teuer und zeitintensiv ist.

Des Weiteren ist mit den aus diesem Stand der Technik bekannten Ansätzen nur eine Fehlerkorrektur an einer ausgehärteten Beschichtung möglich, da durch die Positionierung der Werkzeugvorrichtung auf der Oberfläche des bereits beschichteten Gegenstands zusätzliche Beschichtungsfehler in die noch unvernetzte bzw. nicht ausgehärtete Beschichtung eingebracht werden.

Insbesondere sind die aus dem Stand der Technik bekannten Ansätze in der Regel somit nicht geeignet, um Beschichtungsfehler tatsächlich zu beheben. Vielmehr werden mit den bekannten Ansätzen Beschichtungsfehler lediglich kaschiert, indem nur Teile des Beschichtungsfehlers entfernt werden oder ganze Bereiche der Beschichtung entfernt und neu aufgetragen werden.

Auf Grundlage dieser Problemstellung liegt der Erfindung die Aufgabe zugrunde, ein Verfahren sowie eine Anlage zum vorzugsweise automatischen Beschichten von Gegenständen mit Beschichtungsmaterial, insbesondere Beschichtungspulver, anzugeben, wobei bereits beim Beschichtungsvorgang selber ein optimales Beschichtungsergebnis erzielbar ist, und zwar insbesondere ohne dass es hierzu auf die Erfahrung und das Geschick des Anlagenbetreibers oder Bedieners der Beschichtungspistole ankommt. Insbesondere soll bei gleichzeitiger Reduzierung von Handbeschichtungsarbeit eine konstante Beschichtungsqualität erzielt werden.

Eine weitere Aufgabe der Erfindung ist darin zu sehen, eine Anlage zum vorzugsweise automatischen Beschichten von Gegenständen mit Beschichtungsmaterial, insbesondere Beschichtungspulver, anzugeben, mit welcher nicht nur optimale Beschichtungsergebnisse auch bei Gegenständen mit komplexen geometrischen Umformungen oder Aussparungen erzielbar ist, sondern gleichzeitig auch Ressourcen (Beschichtungsmaterial und Energie) eingespart werden können. Ferner soll dabei insbesondere ohne Zutun einer manuellen Beschichtung die Erstauftragseffizient erhöht werden

Diese Aufgabe wird insbesondere durch eine Anlage zum vorzugsweise automatischen Beschichten von Gegenständen mit Beschichtungsmaterial, insbesondere Beschichtungspulver, gelöst, wobei die Anlage eine Beschichtungsstation mit mindestens einer Beschichtungspistole zum insbesondere bedarfsweisen Versprühen von Beschichtungsmaterial in Richtung eines Beschichtungsbereichs sowie eine Fördervorrichtung aufweist zum insbesondere kontinuierlichen Transportieren von zu beschichtenden Gegenständen durch den Beschichtungsbereich aufweist.

Die Anlage kann insbesondere eine Einrichtung zum Erfassen der An- und/oder Abwesenheit eines zu beschichtenden Gegenstands in einem - in Förderrichtung der Fördervorrichtung gesehen - stromaufwärts der Beschichtungsstation liegenden Überwachungsbereich aufweisen.

Ferner ist eine Steuereinrichtung vorgesehen, welche ausgebildet ist, in Abhängigkeit von dem Erfassungsergebnis und insbesondere zeitverzögert die mindestens eine Beschichtungspistole der Beschichtungsstation anzusteuern.

Durch das Vorsehen einer entsprechenden Einrichtung zum Erfassen der An-und/oder Abwesenheit eines zu beschichtenden Gegenstands ist es möglich, die mindestens eine Beschichtungspistole der Beschichtungsstation dynamisch anzusteuern, und zwar insbesondere nur dann, wenn sich der zu beschichtende Gegenstand tatsächlich in dem Beschichtungsbereich der Beschichtungsstation befindet.

Auf diese Weise ist in einfacher aber effektiver Weise eine deutliche Beschichtungsmaterialeinsparung und ein reduzierter Overspray erzielbar, was letztendlich auch eine verbesserte Beschichtungsqualität mit sich bringen kann.

Die Einrichtung zum Erfassen der An- und/oder Abwesenheit eines zu beschichtenden Gegenstands weist vorzugsweise einen in dem Überwachungsbereich angeordneten Taster und/oder eine berührungslos arbeitende Sensorik insbesondere in Gestalt einer Lichtschranke und/oder in Gestalt eines Lichtvorhangs auf, wobei selbstverständlich auch andere Realisierungen möglich sind.

Eine Lichtschranke im Sinne der vorliegenden Erfindung ist ein System, das die Unterbrechung eines Lichtstrahls erkennt und als elektrisches Signal anzeigt. Auf diese Weise können mit der Einrichtung zum Erfassen der An- und/oder Abwesenheit berührungslos die sich durch den Überwachungsbereich bewegenden und zu beschichtenden Gegenstände detektiert werden.

Die Steuereinrichtung ist vorzugsweise ausgebildet, in Abhängigkeit von dem Erfassungsergebnis und in Abhängigkeit einer Fördergeschwindigkeit und/oder eines Abstands zwischen dem Überwachungsbereich und dem Beschichtungsbereich die mindestens eine Beschichtungspistole der Beschichtungsstation geeignet anzusteuern.

Gemäß Weiterbildungen ist die Einrichtung zum Erfassen der An- und/oder Abwesenheit eines zu beschichtenden Gegenstands ausgebildet, auch die Fördergeschwindigkeit, mit welcher der zu beschichtende Gegenstand durch den Überwachungsbereich gefördert wird, zu erfassen.

Mit der erfindungsgemäßen Anlage lassen sich Gegenstände insbesondere automatischen Beschichten. Bei dem vorzugsweise automatischen Beschichtungsverfahren wird mit Hilfe einer Fördervorrichtung mindestens ein zu beschichtender Gegenstand entlang eines Transportwegs durch einen Beschichtungsbereich einer Beschichtungsstation gefördert, und zwar vorzugsweise mit einer konstanten Fördergeschwindigkeit. In einem Überwachungsbereich, der auf dem Transportweg des mindestens einen zu beschichtenden Gegenstands und - in Förderrichtung der Fördervorrichtung gesehen - stromaufwärts des Beschichtungsbereichs liegt, wird bei dem erfindungsgemäßen Beschichtungsverfahren ferner die An- oder Abwesenheit eines zu beschichtenden Gegenstands erfasst.

Erfindungsgemäß ist bei dem erfindungsgemäßen Beschichtungsverfahren vorgesehen, dass dann, wenn erfasst wird, dass in dem Überwachungsbereich ein zu beschichtender Gegenstand anwesend ist, in der Beschichtungsstation insbesondere zeitverzögert mit mindestens einer Beschichtungspistole Beschichtungsmaterial in Richtung des Beschichtungsbereichs versprüht wird. Vorzugsweise wird hierbei mit einer von der Fördergeschwindigkeit und einem Abstand zwischen dem Überwachungsbereich und dem Beschichtungsbereich abhängigen Zeitverzögerung das Beschichtungsmaterial in Richtung des Beschichtungsbereichs versprüht.

Ferner ist bei dem erfindungsgemäßen Beschichtungsverfahren vorgesehen, dass dann, wenn erfasst wird, dass in dem Überwachungsbereich kein zu beschichtender Gegenstand anwesend ist, in der Beschichtungsstation insbesondere zeitverzögert mit der mindestens einen Beschichtungspistole kein Beschichtungsmaterial in Richtung des Beschichtungsbereichs versprüht wird. Auch hier ist es bevorzugt, dass die mindestens eine Beschichtungspistole mit einer von der Fördergeschwindigkeit und einem Abstand zwischen dem Überwachungsbereich und dem Beschichtungsbereich abhängigen Zeitverzögerung deaktiviert wird.

Die der Erfindung zugrundeliegende Aufgabe wird durch eine Anlage zum vorzugsweise automatischen Beschichten von Gegenständen mit Beschichtungsmaterial, insbesondere Beschichtungspulver, gelöst, wobei die Anlage eine Beschichtungsstation mit mindestens einer Beschichtungspistole zum insbesondere bedarfsweisen Versprühen von Beschichtungsmaterial in Richtung eines Beschichtungsbereichs sowie eine Fördervorrichtung zum insbesondere kontinuierlichen Transportieren von zu beschichtenden Gegenständen durch den Beschichtungsbereich aufweist, wobei erfindungsgemäß insbesondere die Anlage einer Einrichtung zum Erfassen einer Größe, Geometrie und/oder Kontur von mindestens einem Bereich eines zu beschichtenden Gegenstands in einem - in Förderrichtung der Fördervorrichtung gesehen - stromaufwärts der Beschichtungsstation liegenden Überwachungsbereich aufweist.

Erfindungsgemäß ist dabei der Beschichtungsstation eine Positioniereinrichtung zugeordnet, um insbesondere wahl- und/oder bedarfsweise die mindestens eine Beschichtungspistole relativ zu dem Beschichtungsbereich zu positionieren. Ferner kann eine Steuereinrichtung vorgesehen sein, welche ausgebildet ist, in Abhängigkeit von der erfassten Größe, Geometrie und/oder Kontur des zu beschichtenden Gegenstands und insbesondere zeitverzögert die Positioniereinrichtung der Beschichtungsstation geeignet anzusteuern.

Gemäß der Erfindung kann die Beschichtungsanlage selbstverständlich auch eine Einrichtung zum Erfassen der An- und/oder Abwesenheit eines zu beschichtenden Gegenstands in einem - in Förderrichtung der Fördervorrichtung gesehen - stromaufwärts der Beschichtungsstation liegenden Überwachungsbereich aufweisen.

Erfindungsgemäß ist ferner eine Steuereinrichtung vorgesehen, welche ausgebildet ist, in Abhängigkeit von dem Erfassungsergebnis und insbesondere zeitverzögert die mindestens eine Beschichtungspistole der Beschichtungsstation geeignet anzusteuern.

Mit anderen Worten, es wird insbesondere eine vorzugsweise automatische Beschichtungsanlage angegeben, bei welcher - in Förderrichtung der Fördervorrichtung gesehen - stromaufwärts der Beschichtungsstation zum einen die An-und/oder Abwesenheit eines zu beschichtenden Gegenstands erfasst und zum anderen die Größe, Geometrie und/oder Kontur von mindestens einem Bereich des zu beschichtenden Gegenstands erfasst werden/wird. Mit dieser Information wird mit Hilfe der Steuereinrichtung die mindestens eine Beschichtungspistole der Beschichtungsstation und insbesondere die Positioniereinrichtung der Beschichtungsstation derart angepasst,
(i) dass die mindestens eine Beschichtungspistole vorzugsweise nur dann Beschichtungsmaterial in Richtung des Beschichtungsbereichs versprüht, wenn sich der zu beschichtenden Gegenstand tatsächlich in dem Beschichtungsbereich befindet; und/oder
(ii) dass mit Hilfe der Positioniereinrichtung die mindestens eine Beschichtungspistole vorzugsweise dynamisch im Beschichtungsbereich der Beschichtungsstation so positioniert wird, dass zwischen der Beschichtungspistole und der Oberfläche des zu beschichtenden Gegenstands ein vorab festgelegter oder festlegbarer (und insbesondere im Hinblick auf die Beschichtungsmaterialauftragung optimaler) Abstand und/oder eine vorab festgelegte oder festlegbare (und insbesondere im Hinblick auf die Beschichtungsmaterialauftragung optimale) Ausrichtung/Orientierung zu der Oberfläche des zu beschichtenden Gegenstands eingestellt und/oder eingehalten werden/wird.

Mit der Einrichtung zum Erfassen einer Größe, Geometrie und/oder Kontur von mindestens einem Bereich eines zu beschichtenden Gegenstands erfolgt somit eine dynamische Konturerkennung, welche insbesondere bei der Automatisierung der Beschichtungsanlage optimale Beschichtungsergebnisse selbst bei komplexen Geometrien des zu beschichtenden Gegenstands liefert. Es ist somit möglich, komplexe Objektgeometrien zu erkennen und die mindestens eine Beschichtungspistole der Beschichtungsstation in die optimale Position zu bringen, um im Beschichtungsbereich der Beschichtungsstation den Gegenstand zu beschichten.

Demnach ist erfindungsgemäß insbesondere ein Verfahren zur insbesondere automatischen Beschichtung von Gegenständen realisierbar, wobei mit Hilfe einer Fördervorrichtung mindestens ein zu beschichtender Gegenstand entlang eines Transportwegs durch einen Beschichtungsbereich einer Beschichtungsstation gefördert wird, und zwar vorzugsweise mit einer konstanten Fördergeschwindigkeit, und wobei in einem Überwachungsbereich, der auf dem Transportweg des mindestens einen zu beschichtenden Gegenstands und - in Förderrichtung der Fördervorrichtung gesehen - stromaufwärts des Beschichtungsbereichs liegt, eine Größe, Geometrie und/oder Kontur zumindest eines Bereichs eines zu beschichtenden Gegenstands erfasst werden/wird.

Bei dem insbesondere automatischen Beschichtungsverfahren wird mit Hilfe einer Positioniereinrichtung in der Beschichtungsstation insbesondere zeitverzögert mindestens eine Beschichtungspistole in horizontaler und/oder vertikaler Richtung und/oder in Förderrichtung derart mit Bezug zu dem Beschichtungsbereich positioniert und/oder ausgerichtet, dass dann, wenn der zu beschichtende Gegenstand durch den Beschichtungsbereich gefördert wird, die mindestens eine Beschichtungspistole stets einen vorab festgelegten oder festlegbaren Abstand und/oder eine vorab festgelegte oder festlegbare Ausrichtung zu der Oberfläche des zu beschichtenden Gegenstands aufweist.

Vorzugsweise wird die mindestens eine Beschichtungspistole dynamisch und insbesondere mit einer von der Fördergeschwindigkeit und einem Abstand zwischen dem Überwachungsbereich und dem Beschichtungsbereich abhängigen Zeitverzögerung entsprechend positioniert und/oder ausgerichtet.

Gemäß der vorliegenden Erfindung ist vorgesehen, dass die Einrichtung zum Erfassen einer Größe, Geometrie und/oder Kontur von mindestens einem Bereich eines zu beschichtenden Gegenstands ein erstes optisches Erfassungssystem in Gestalt mindestens eines ersten Laserscanning-Systems aufweist, welches ausgebildet ist, in dem Überwachungsbereich insbesondere zeilen- oder rasterartig den mindestens einen Bereich des zu beschichtenden Gegenstands mit mindestens einem Laserstrahl abzutasten und/oder zu überstreichen, um diesen zu vermessen.

Unter dem hierin verwendeten Begriff "Laserscanning-System" ist grundsätzlich ein System zu verstehen, mit welchem mit einem Laserstrahl zeilen- oder rasterartige Oberflächen oder Körpern überstreichbar sind, um diese zu vermessen, zu bearbeiten oder um ein Bild zu erzeugen. Ein Laserscanning-System gemäß der vorliegenden Offenbarung umfasst insbesondere einen Laserscanner, also Sensoren, die den Laserstrahl entsprechend ablenken. Als Laserscanner können auch solche zum Einsatz kommen, die neben der Objektgeometrie zusätzlich die Intensität des reflektierten Signals erfassen.

Ein bei dem Laserscanner-System eingesetzter Laserscanner besteht vorzugsweise aus einem Scankopf und einer Treiber- und Ansteuerelektronik. Die Elektronik besteht aus einem leistungselektronischen Teil, der die Ströme für die Antriebe liefert, und aus einer z. B. auf einem PC oder eingebetteten System laufenden Scannersoftware, die die Treiberelektronik anspricht. Im Scankopf wird der Laserstrahl abgelenkt, dessen Ablenkungswinkel gemessen und vorzugsweise elektronisch geregelt wird.

Bei dem ersten optischen Erfassungssystem bzw. bei dem mindestens einen ersten Laserscanning-System des ersten optischen Erfassungssystems ist es nicht zwingend notwendig, dass der mindestens eine Laserstrahl relativ zu dem zu vermessenden Gegenstand und horizontal relativ zu der Förderrichtung des zu vermessenden Gegenstands abgelenkt wird, um eine Überstreichen des Laserstrahls zu erreichen, da vorzugsweise mit Hilfe der Fördervorrichtung der zu beschichtende und zu vermessende Gegenstand insbesondere kontinuierlich, d.h. mit vorzugsweise gleichbleibender Fördergeschwindigkeit, durch den Überwachungsbereich transportiert wird.

Erfindungsgemäß verläuft der mindestens eine Laserstrahl des ersten Laserscanning-Systems in einer ersten Richtung relativ zu der Förderrichtung der Fördervorrichtung und insbesondere senkrecht oder zumindest im Wesentlichen senkrecht zu der Förderrichtung.

Mit anderen Worten ist das erste Laserscanning-System vorzugsweise orthogonal im Hinblick auf die Förderrichtung der Fördervorrichtung ausgerichtet.

Vorzugsweise ist das erste Laserscanning-System als ein polar messendes Laserscanning-System ausgeführt und ausgebildet, in dem Überwachungsbereich in vertikaler Richtung den mindestens einen Bereich des zu beschichtenden Gegenstands mit dem mindestens einen Laserstrahl zu überstreichen und/oder abzutasten.

Mit der so erzielten Objekt- bzw. Konturerfassung können die Prozesssicherheit erhöht und optimale Beschichtungsergebnisse erzielt werden. Dabei werden die zu beschichtenden Gegenstände mit dem (ersten) Laserscanning-System erfasst und es wird in der Beschichtungsstation dynamisch die mindestens eine Beschichtungspistole - je nach Geometriestruktur des in dem Beschichtungsbereich zu beschichtenden Gegenstands - optimal und/oder ausgerichtet positioniert. Vorzugsweise weist die Beschichtungsstation eine Vielzahl von Beschichtungspistolen auf, welche mit Hilfe der dynamischen Konturerkennung in der Beschichtungsstation je nach Geometriestruktur des Gegenstands vorzugsweise individuell positionierbar sind.

Erfindungsgemäß weist die Einrichtung zum Erfassen einer Größe, Geometrie und/oder Kontur von mindestens einem Bereich eines zu beschichtenden Gegenstands ferner mindestens ein zweites Laserscanning-System auf, welches ausgebildet ist, in dem Überwachungsbereich der Einrichtung zum Erfassen einer Größe, Geometrie und/oder Kontur insbesondere zeilen-oder rasterartig den mindestens einen Bereich des zu beschichtenden Gegenstands mit mindestens einem Laserstrahl abzutasten und/oder zu überstreichen, um diesen zu vermessen, wobei der mindestens eine Laserstrahl des mindestens einen zweiten Laserscanning-Systems schräg relativ zu der Förderrichtung der Fördervorrichtung verläuft.

Mit dieser Weiterbildung sind auch dünne Geometrien des zu beschichtenden Gegenstands, wie beispielsweise Streben oder Seitenwände von Kästen erfassbar. Derartige dünnere Geometrien sind mit dem ersten Laserscanning-System, welches orthogonal im Hinblick auf die Förderrichtung der Fördervorrichtung ausgerichtet ist, abhängig von der Fördergeschwindigkeit nur teilweise erfassbar. Durch das Vorsehen eines weiteren, zweiten Laserscanning-Systems, dessen mindestens ein Laserstrahl schräg zu der Förderrichtung der Fördervorrichtung ausgerichtet ist, sind die Geometrien des zu beschichtenden bzw. zu vermessenden Gegenstands aus einer weiteren Perspektive erfassbar. Auf diese Weise ist die Auflösung, die mit der Einrichtung zum Erfassen einer Größe, Geometrie und/oder Kontur erzielbar ist, deutlich erhöht, und zwar insbesondere unabhängig von der Fördergeschwindigkeit der Fördervorrichtung.

Der mindestens eine Laserstrahl des mindestens einen zweiten Laserscanning-Systems verläuft insbesondere in einem stumpfen Winkel relativ zu der Förderrichtung der Fördervorrichtung.

Alternativ oder zusätzlich hierzu verläuft der mindestens eine Laserstrahl des mindestens einen zweiten Laserscanning-Systems in einem spitzen Winkel relativ zu der Förderrichtung der Fördervorrichtung.

Das mindestens eine zweite Laserscanning-System ist vorzugsweise als 2D-Laserscanning-System ausgeführt und ausgebildet, in dem Überwachungsbereich in vertikaler Richtung den mindestens einen Bereich des zu beschichtenden Gegenstands mit dem mindestens einen Laserstrahl zu überstreichen und/oder abzutasten, um die Größe, Kontur bzw. Geometrie des Gegenstands zu vermessen.

Insbesondere ist es grundsätzlich denkbar, dass das mindestens eine zweite Laserscanning-System als ein von dem ersten Laserscanning-System separates System ausgebildet ist.

Zur Minimierung der Baugröße ist jedoch ein (einziges) kompaktes System bevorzugt, in welchem das erste und das mindestens eine zweite Laserscanning-System gemeinsam integriert sind. Ein solches kompaktes System, welches die Funktion des ersten und des mindestens einen zweiten Laserscanning-System verwirklicht, ist insbesondere ausgebildet, im Überwachungsbereich der Einrichtung zum Erfassen einer Größe, Geometrie und/oder Kontur zumindest bereichsweise eine 3D-Oberfläche des zu beschichtenden Gegenstands abzutasten.

Das Abtasten einer 3D-Oberfläche mit einem Laserstrahl erfordert unterschiedliche Scanmechanismen, um den Laser über die Oberfläche zu bewegen. Dabei kann der Scanvorgang beispielsweise durch zwei orthogonal angebrachte Spiegel durchgeführt werden. Alternativ hierzu kann der Laserstrahl in eine Richtung mit dem Scanspiegel scannen, und dieser rotiert mit Hilfe einer mechanischen Vorrichtung.

Gemäß Realisierungen des ersten und/oder des mindestens einen zweiten Laserscanner-Systems kommt mindestens ein Triangulationsscanner zum Einsatz, mit welchem eine Linie anstatt eines einzelnen Punktes projiziert wird. In diesem Fall ist der Scan auf eine Richtung beschränkt. Projektionen von mehreren Linien oder Streifenmustern erlauben es, ganze Felder aufzunehmen.

Die einfachste Methode, um eine Scanbewegung zu erzeugen, ist die Veränderung der Orientierung eines Spiegels, an dem der Laserstrahl reflektiert wird. In einer räumlichen Dimension kann das durch einen Galvanometerantrieb, durch einen sich kontinuierlich drehenden Spiegel oder durch ein sich kontinuierlich drehendes Spiegelprisma (Polygonspiegel) erfolgen, je nachdem, ob eine frei programmierbare Bewegung (Vektorsteuerung) oder eine periodische Bewegung (Zeile, Bild) gewünscht ist. Man unterscheidet daher üblicherweise Vektorscanner und Rasterscanner.

Zur zweidimensionalen Ablenkung muss entweder ein Spiegel in zwei Richtungen ausgelenkt werden - wie vor allem bei langsamen Systemen eingesetzt -, oder es werden zwei orthogonal drehbare stehende Spiegel nahe beieinander aufgestellt, über die der Laserstrahl reflektiert wird. Die beiden Plan- bzw. Polygonspiegel werden dann von je einem Galvanometerantrieb oder Elektromotor angetrieben.

Die Positioniereinrichtung der Beschichtungsstation ist insbesondere ausgebildet, die mindestens eine Beschichtungspistole relativ zu dem Beschichtungsbereich senkrecht zu der Förderrichtung der Fördervorrichtung horizontal zu bewegen. Vorzugsweise weist dabei die Beschichtungsstation eine Vielzahl von Beschichtungspistolen auf, die zumindest teilweise vorzugsweise vertikal übereinander angeordnet sind, wobei die Beschichtungspistolen jeweils in Richtung des Beschichtungsbereichs ausgerichtet und mit Hilfe der Positioniereinrichtung relativ zueinander und relativ zu dem Beschichtungsbereich individuell horizontal bewegbar sind.

Alternativ oder zusätzlich hierzu ist die Positioniereinrichtung ausgebildet, die mindestens eine Beschichtungspistole bzw. die einzelnen Beschichtungspistolen unabhängig voneinander relativ zu dem Beschichtungsbereich senkrecht zu der Förderrichtung der Fördervorrichtung vertikal zu bewegen.

Die Erfindung betrifft ferner ein Verfahren zum automatischen Beschichten von Gegenständen mit Beschichtungsmaterial, insbesondere Beschichtungspulver.

Gemäß des erfindungsgemäßen Beschichtungsverfahrens wird mit Hilfe einer Fördervorrichtung mindestens ein zu beschichtender Gegenstand entlang eines Transportwegs durch einen Beschichtungsbereich einer Beschichtungsstation gefördert, und zwar vorzugsweise mit einer konstanten Fördergeschwindigkeit. Bei dem erfindungsgemäßen Beschichtungsverfahren ist

ferner vorgesehen, dass in einem Überwachungsbereich, der auf dem Transportweg des mindestens einen zu beschichtenden Gegenstands und - in Förderrichtung der Fördervorrichtung gesehen - stromaufwärts des Beschichtungsbereichs liegt, eine Größe, Geometrie und/oder Kontur zumindest eines Bereichs eines zu beschichtenden Gegenstands erfasst werden/wird.

In diesem Zusammenhang ist vorgesehen, dass mit Hilfe einer Positioniereinrichtung in der Beschichtungsstation insbesondere zeitverzögert und vorzugsweise mit einer von der Fördergeschwindigkeit und einem Abstand zwischen dem Überwachungsbereich und dem Beschichtungsbereich abhängigen Zeitverzögerung mindestens eine Beschichtungspistole in horizontaler und/oder vertikaler Richtung und/oder in Förderrichtung derart mit Bezug zu dem Beschichtungsbereich positioniert und/oder ausgerichtet wird, dass dann, wenn der zu beschichtende Gegenstand durch den Beschichtungsbereich gefördert wird, die mindestens eine Beschichtungspistole stets einen vorab festgelegten oder festlegbaren Abstand und/oder eine vorab festgelegte oder festlegbare Ausrichtung zu der Oberfläche des zu beschichtenden Gegenstands aufweist.

Erfindungsgemäß werden/wird bei dem erfindungsgemäßen Beschichtungsverfahren die Größe, Geometrie und/oder Kontur des zumindest eines Bereichs des zu beschichtenden Gegenstands durch zumindest bereichsweises Abtasten des Gegenstands mit Hilfe mindestens eines ersten Laserstrahls, der senkrecht zu der Förderrichtung der Fördervorrichtung verläuft, und mit Hilfe mindestens eines zweiten Laserstahls, der schräg zu der Förderrichtung der Fördervorrichtung verläuft, erfasst.

Nachfolgend wird unter Bezugnahme auf die beiliegenden Zeichnungen eine exemplarische Ausführungsform der erfindungsgemäßen Beschichtungsanlage näher beschrieben.

Es zeigen:
- FIG. 1: schematisch und in einer Draufsicht eine exemplarische Ausführungsform der erfindungsgemäßen Beschichtungsanlage; und
- FIG. 2: schematisch und in einer Seitenansicht der Beschichtungsbereich der exemplarischen Ausführungsform der Beschichtungsanlage gemäß FIG. 1.

Der vorliegenden Erfindung liegt insbesondere die Problemstellung zugrunde, dass eine automatische Beschichtung bei einer großen Teilevielfalt, bei komplexen Geometrien und bei kleinen Losgrößen in der Regel nicht in effizienter Weise möglich ist. Die Abdeckung dieser Vielfalt erfordert entweder eine umfangreiche manuelle Beschichtung oder den Einsatz eines Roboters, der für jede Variation separat zu programmieren ist. In jedem Fall geht ein technischer Aufwand einher, der gut geschultes Personal sowie Platz an und in der Beschichtungskabine 2 erfordert.

Bei konventionellen Beschichtungsverfahren werden alle Beschichtungspistolen 3 zusammen über eine Breitenerkennung in der Tiefe (d.h. in der Y-Richtung) positioniert. Das erfordert im Beschichtungsbereich 4 meist einen Sicherheitsabstand zu dem zu beschichtenden Gegenstand 11, um Kollisionen der Beschichtungspistolen 3 mit den Teilen des zu beschichtenden Gegenstands 11 zu vermeiden. Ein Roboter kann demgegenüber jede Kontur individuell und exakt abfahren. Das wiederum bedingt einen hohen Programmierungsaufwand, die Hinterlegung sämtlicher Teilevariationen im Produktionsablauf und eine Beschichtungskabine 2 mit Raum und entsprechendem Abluftvolumen.

Die mit der vorliegenden Erfindung vorgeschlagene dynamische Konturerkennung bietet eine wirtschaftliche Alternative zum technisch relativ aufwändigen Robotersystem.

Wie es nachfolgend unter Bezugnahme auf die beiliegenden Zeichnungen näher beschrieben wird, nehmen am Eingang oder im Eingangsbereich einer Beschichtungskabine 2 (Beschichtungsstation) Laserscanner-Systeme permanent die Außenkontur der zu beschichtenden Gegenstände 11 auf.

Die Daten der Laserscanner-Systeme werden über eine Steuereinrichtung 13 an eine Positioniereinrichtung 10 übermittelt, welche vorzugsweise ausgebildet ist, die von einer Positioniereinrichtung 10 getragenen oder andersartig positionierbaren Beschichtungspistolen 3 zumindest in der vertikalen (Z-Richtung) und/oder in der Y-Richtung, die senkrecht zur Z-Richtung und senkrecht zu einer Transportrichtung (= X-Richtung) der zu beschichtenden Gegenstände 11 verläuft, zu positionieren. Insbesondere ist die Positioniereinrichtung 10 ausgebildet, in der Beschichtungsstation die Beschichtungspistolen 3 individuell und laufend korrigierend vor dem zu beschichtenden Gegenstand 11 in der Beschichtungsstation 2 punktgenau zu positionieren. Das Resultat sind höchste Effizienz und optimale Beschichtungsergebnisse.

Die in den Beschichtungsprozess integrierte, kontinuierliche Konturenerkennung durch das mindestens eine Laserscanner-System ermöglicht auch für Standardanlagen einen hohen Automatisierungsgrad. Die zeitaufwändige Positionierung von Achsen oder die manuelle Programmierung von Teileformen entfallen.

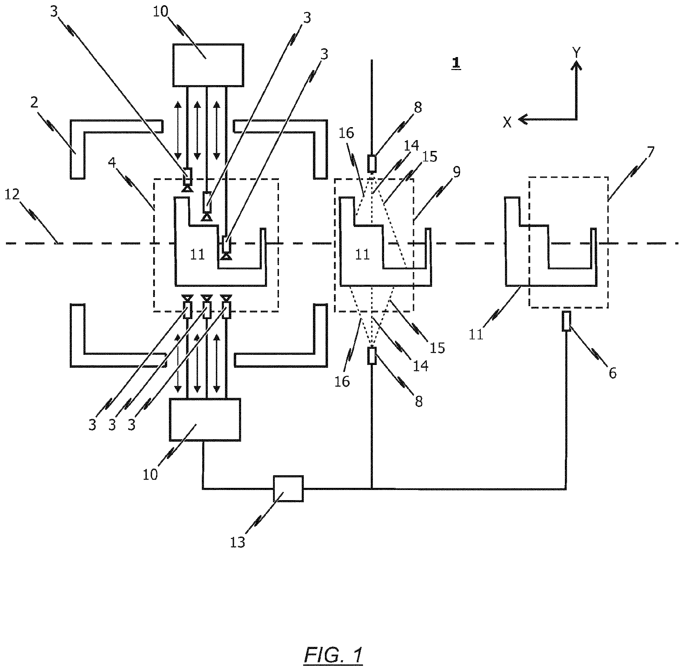

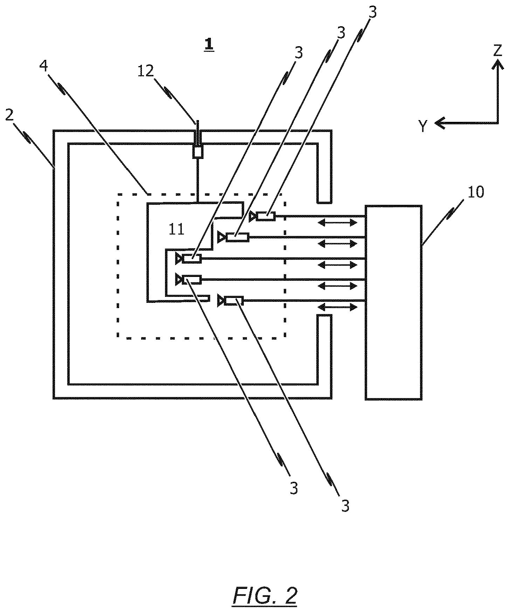

Im Einzelnen, und wie es beispielsweise der schematischen Darstellung in FIG. 1 und FIG. 2 entnommen werden kann, weist die exemplarische Ausführungsform der vorzugsweise automatischen Beschichtungsanlage 1 eine Beschichtungsstation 2 auf, die insbesondere in Gestalt einer Beschichtungskabine 2 ausgeführt ist.

In das Innere der Beschichtungsstation 2 sind mit Hilfe einer Positioniereinrichtung 10 Beschichtungspistolen 3 (in Y-Richtung) einfahrbar, um insbesondere bedarfsweise Beschichtungsmaterial in Richtung eines Beschichtungsbereichs 4 zu versprühen.

Der Beschichtungsanlage 1 ist ferner eine Fördervorrichtung 12 zugeordnet, um insbesondere kontinuierlich die zu beschichtenden Gegenstände 11 durch den Beschichtungsbereich 4 in der Beschichtungsstation/Beschichtungskabine 2 zu transportieren. Vorzugsweise werden die Gegenstände 11 mit einer konstanten und vorab festgelegten oder festlegbaren Transport- oder Fördergeschwindigkeit insbesondere in X-Richtung transportiert.

Bei der Fördervorrichtung 12 handelt es sich beispielsweise um einen sog. "Flurförderer", bei welchem die Fördervorrichtung 12 unterhalb des Kabinenbodens der Beschichtungskabine 2 angeordnet ist.

Alternativ hierzu ist es aber auch denkbar, die zu beschichtenden Gegenstände 11 hängend durch den Beschichtungsbereich 4 der Beschichtungsstation 2 zu transportieren.

Wie in FIG. 1 angedeutet, weist die die Beschichtungsstation ausbildende Beschichtungskabine 2 - in Transportrichtung der Fördervorrichtung 12 gesehen - stromaufwärts einen Eingang und stromabwärts einen Ausgang auf. Zwischen dem Eingang und dem Ausgang ist im Inneren der Beschichtungskabine 2 der Beschichtungsbereich 4 vorgesehen.

Die einzelnen Beschichtungspistolen 3 werden mit Hilfe der bereits genannten Positioniereinrichtung 10 durch Öffnungen in den Seitenwänden relativ zu dem zu beschichtenden Gegenstand 11 positioniert und/oder ausgerichtet.

Die Beschichtungsanlage 1 zeichnet sich dadurch aus, dass diese eine Einrichtung 6 zum Erfassen der An- und/oder Abwesenheit eines zu beschichtenden Gegenstands 11 in einem - in Förderrichtung der Fördervorrichtung 12 gesehen - stromaufwärts der Beschichtungsstation 2 liegenden Überwachungsbereich 7 aufweist. Bei dieser Einrichtung 6 zum Erfassen der An- und/oder Abwesenheit eines zu beschichtenden Gegenstands 11 handelt es sich insbesondere um eine Lichtschranke oder einen Lichtvorhang.

Mit der Einrichtung zum Erfassen 6 der An- und/oder Abwesenheit eines zu beschichtenden Gegenstands 11 in dem - in Förderrichtung der Fördervorrichtung 12 gesehen - stromaufwärts der Beschichtungsstation 2 liegenden Überwachungsbereich 7 lassen sich Gegenstände 11 in einer automatischen Weise beschichten, wobei Ressourcen (insbesondere Beschichtungsmaterial) eingespart werden können, da ein übermäßiger Overspray wirksam verhindert wird.

Bei dem vorzugsweise automatischen Beschichtungsverfahren werden mit Hilfe der Fördervorrichtung 12 die zu beschichtenden Gegenstände 11 entlang eines Transportwegs durch den Beschichtungsbereich 4 einer Beschichtungsstation 2 gefördert, und zwar vorzugsweise mit einer konstanten Fördergeschwindigkeit. In dem Überwachungsbereich 7 der Einrichtung 6 zum Erfassen der An- und/oder Abwesenheit eines zu beschichtenden Gegenstands 11, der auf dem Transportweg der zu beschichtenden Gegenstände 11 und - in Förderrichtung der Fördervorrichtung 12 gesehen - stromaufwärts des Beschichtungsbereichs 4 liegt, wird dabei die An- oder Abwesenheit eines zu beschichtenden Gegenstands 11 erfasst.

Insbesondere ist bei dem erfindungsgemäßen Beschichtungsverfahren vorgesehen, dass dann, wenn erfasst wird, dass in dem Überwachungsbereich 7 ein zu beschichtender Gegenstand 11 anwesend ist, in der Beschichtungsstation 2 insbesondere zeitverzögert mit mindestens einer Beschichtungspistole 3 Beschichtungsmaterial in Richtung des Beschichtungsbereichs 4 versprüht wird. Vorzugsweise wird hierbei mit einer von der Fördergeschwindigkeit und einem Abstand zwischen dem Überwachungsbereich 7 und dem Beschichtungsbereich 4 abhängigen Zeitverzögerung das Beschichtungsmaterial in Richtung des Beschichtungsbereichs 4 versprüht.

Ferner ist bei dem erfindungsgemäßen Beschichtungsverfahren insbesondere vorgesehen, dass dann, wenn erfasst wird, dass in dem Überwachungsbereich 7 kein zu beschichtender Gegenstand 11 anwesend ist, in der Beschichtungsstation 2 insbesondere zeitverzögert mit der mindestens einen Beschichtungspistole 3 kein Beschichtungsmaterial in Richtung des Beschichtungsbereichs 4 versprüht wird.

Auch hier ist es bevorzugt, dass die mindestens eine Beschichtungspistole 3 mit einer von der Fördergeschwindigkeit und einem Abstand zwischen dem Überwachungsbereich 7 und dem Beschichtungsbereich 4 abhängigen Zeitverzögerung deaktiviert wird.

Insbesondere werden somit die Signale der Einrichtung 6 zum Erfassen der An-und/oder Abwesenheit eines zu beschichtenden Gegenstands 11 einer Steuereinrichtung 13 zugeführt, welche ausgebildet ist, in Abhängigkeit von dem Erfassungsergebnis und insbesondere zeitverzögert die Beschichtungspistolen 3 der Beschichtungsstation 2 anzusteuern.

Vorzugsweise ist ein mit der Fördervorrichtung 12 zusammenwirkender Encoder vorgesehen, der ausgebildet ist, die Fördergeschwindigkeit, mit welcher der zu beschichtenden Gegenstand 11 durch den Überwachungsbereich 7 gefördert wird, zu erfassen.

Mit dieser Information kann die Steuereinrichtung 13 gezielt die einzelnen Beschichtungspistolen 3 der Beschichtungsstation 2 aktivieren bzw. deaktivieren, und zwar sobald der zu beschichtende Gegenstand 11 in dem Beschichtungsbereich 4 der Beschichtungsstation 2 vorliegt bzw. sobald der Gegenstand 11 aus dem Beschichtungsbereich 4 herausgefördert ist.

Zusätzlich ist bei der erfindungsgemäßen Anlage 1 eine Einrichtung 8 zum Erfassen einer Größe, Geometrie und/oder Kontur von mindestens einem Bereich eines zu beschichtenden Gegenstands 11 vorgesehen. Diese Einrichtung 8 vermisst den zu beschichtenden Gegenstand 11 in einem - in Förderrichtung der Fördervorrichtung 12 gesehen - im Hinblick auf die Beschichtungsstation 2 stromaufwärts liegenden Überwachungsbereich 9.

Die ermittelten Daten bezüglich der Größe, Geometrie und/oder Kontur des zu beschichtenden Gegenstands 11 werden der Steuereinrichtung 13 zugeführt. Diese wiederum steuert die Positioniereinrichtungen 10 der jeweiligen Beschichtungspistolen 3 geeignet an, und zwar derart, dass die Beschichtungspistolen 3 im Beschichtungsbereich 4 der Beschichtungsstation 2 exakt die Konturen des zu beschichtenden Gegenstands 11 abfahren bzw. stets so positioniert und/oder ausgerichtet werden, dass ein vorab festgelegter oder festlegbarer Abstand zwischen den Beschichtungspistolen 3 und der Oberfläche des zu beschichtenden Gegenstands 11 vorliegt.

Gemäß der in den Zeichnungen gezeigten Ausführungsform kommt zum Vermessen der Größe, Geometrie und/oder Kontur des zu beschichtenden Gegenstands 11 ein erstes Laserscanning-System zum Einsatz, welches ausgebildet ist, in dem Überwachungsbereich 9 insbesondere zeilen- oder rasterartig den mindestens einen Bereich des zu beschichtenden Gegenstands 11 mit mindestens einem ersten Laserstrahl 14 zu überstreichen und/oder abzutasten, um diesen zu vermessen.

Der mindestens eine erste Laserstrahl 14 des ersten Laserscanning-Systems verläuft dabei senkrecht oder zumindest im Wesentlichen senkrecht zu der Förderrichtung der Fördervorrichtung 12.

Bei dem ersten Laserscanning-System handelt es sich insbesondere um ein polar arbeitendes Laserscanning-System oder 2D-Laserscanning-System, welches ausgebildet ist, in dem Überwachungsbereich 9 in vertikaler Richtung den mindestens einen Bereich des zu beschichtenden Gegenstands 11 mit dem mindestens einen ersten Laserstrahl 14 zu überstreichen und/oder abzutasten.

Bei dieser orthogonalen Ausrichtung des ersten Laserscanning-Systems sind - solange die Fördergeschwindigkeit der Fördervorrichtung 12 hinreichend gering ist - auch relativ dünne Geometrien des zu beschichtenden Gegenstands 11 erfassbar, wie beispielsweise Streben oder Seitenwände.

Allerdings ist die Auflösung des orthogonal ausgerichteten ersten Laserscanning-Systems abhängig von der Fördergeschwindigkeit. Die Erkennung der Geometrie verhält sich in etwa linear mit der Fördergeschwindigkeit. Mit anderen Worten, doppelte Fördergeschwindigkeit heißt Verdoppelung der gerade noch zu erkennenden kleinsten Geometrie.

Um die Bauteilgeometrieerfassung zu verfeinern, kommt bei der erfindungsgemä-ßen Lösung mindestens ein weiteres (zweites) Laserscanner-System zum Einsatz, welches nicht lediglich die Geometrien auf "orthogonale" Weise erfasst, sondern auch Geometrien aus mindestens einer weiteren Perspektive erfasst. Der Laser ist dabei mit mehreren Scanebenen versehen und scannt mehrere Ebenen ab.

Dazu liefert ein an der Fördervorrichtung 12 angebrachter Encoder die Information, mit welcher Geschwindigkeit sich der zu beschichtende Gegenstand 11 bewegt bzw. die Position des Gegenstands 11. Die Informationen aus mindestens zwei Ebenen und die Information der Geschwindigkeit ermöglichen es rein durch eine Koordinatentransformation die Erkennung von kleinsten/dünnsten Geometrien. Die Laserscanner-Systeme messen die Distanz zwischen dem Laserscanner und dem Gegenstand 11 und geben diese Information zusammen mit der Position des Gegenstands 11 (Fördererposition) an eine Auswerteeinheit weiter. Diese Information wird in einem Schieberegister quasi mit der Fördergeschwindigkeit stromabwärts getaktet um die Positioniereinrichtung 10 und Pistolen 3 zu steuern. Dabei erhöht die winkelversetzte Distanzmessung mit Hilfe des zweiten Laserscanner-Systems die Genauigkeit der orthogonal erfolgten Distanzmessung mit Hilfe des ersten Laserscanner-Systems.

In einem weiteren Schritt werden die einzelnen Messwerte und die Geschwindigkeit ausgewertet, um die einzelnen Beschichtungspistolen 3 in der Beschichtungsstation 2 individuell anzusteuern.

Die Laserscanner des ersten und des mindestens einen zweiten Laserscanner-Systems, welche Teil der Einrichtung 8 zur Konturerkennung sind, arbeiten vorzugsweise zweidimensional. Sie messen die Distanz zum Gegenstand 11 vor ihnen, so dass mit der weiteren Information der Förderposition die einzelnen Beschichtungspistolen 3 in der Beschichtungsstation 2 individuell und dynamisch anzusteuerbar sind.

Die gescannte Objektkontur wird vorzugsweise in Zonen unterteilt, um jede einzelne Beschichtungspistole 3 der Beschichtungsstation 2 entsprechend zu positionieren und zu aktivieren. Abhängig von der Objektgeometrie oszillieren die Beschichtungspistolen 3 in der Beschichtungsstation 2 oder verharren in einer festen Position. Jede einzelne Achse der Positioniereinrichtung 10 wird entsprechend der erfassten Teilegeometrie zugestellt. Ein Encoder sorgt für die Synchronisierung der Bauteile mit der Beschichtungspistolenposition.

Zur Minimierung der Baugröße ist bei der in den Zeichnungen schematisch dargestellten Beschichtungsanlage 1 ein (einziges) kompaktes System 8 bevorzugt, in welchem das erste und das mindestens eine zweite Laserscanning-System gemeinsam integriert sind. Dieses System verwirklicht die Funktion des ersten und des mindestens einen zweiten Laserscanning-System und ist insbesondere ausgebildet, im Überwachungsbereich 9 der Einrichtung 8 zum Erfassen einer Größe, Geometrie und/oder Kontur zumindest bereichsweise eine 3D-Oberfläche des zu beschichtenden Gegenstands 11 abzutasten.

Insbesondere ist in diesem Zusammenhang vorgesehen, dass zum Erfassen einer Größe, Geometrie und/oder Kontur von mindestens einem Bereich eines zu beschichtenden Gegenstands 11 in dem Überwachungsbereich 9 insbesondere zeilen- oder rasterartig der mindestens eine Bereich des zu beschichtenden Gegenstands 11 mit mindestens einem ersten Laserstrahl 14 abgetastet und/oder überstrichen wird, um diesen zu vermessen, wobei der mindestens eine erste Laserstrahl 14 in einer ersten Richtung relativ zu der Förderrichtung der Fördervorrichtung 12 und insbesondere senkrecht oder zumindest im Wesentlichen senkrecht zu der Förderrichtung verläuft.

Ferner ist bei der in den Zeichnungen schematisch dargestellten Beschichtungsanlage 1 vorgesehen, dass in dem Überwachungsbereich 9 der Einrichtung 8 zum Erfassen einer Größe, Geometrie und/oder Kontur insbesondere zeilen- oder rasterartig der mindestens einen Bereich des zu beschichtenden Gegenstands 11 mit mindestens einem zweiten Laserstrahl 15 abgetastet und/oder überstrichen wird, wobei der mindestens eine zweite Laserstrahl 15 in einem spitzen Winkel relativ zu der Förderrichtung der Fördervorrichtung 12 verläuft.

Darüber hinaus ist vorgesehen, dass in dem Überwachungsbereich 9 der Einrichtung 8 zum Erfassen einer Größe, Geometrie und/oder Kontur insbesondere zeilen- oder rasterartig der mindestens einen Bereich des zu beschichtenden Gegenstands 11 mit mindestens einem dritten Laserstrahl 16 abgetastet und/oder überstrichen wird, wobei der mindestens eine dritte Laserstrahl 16 in einem stumpfen Winkel relativ zu der Förderrichtung der Fördervorrichtung 12 verläuft.

Auf diese Weise werden am Eingang oder im Eingangsbereich der Beschichtungskabine 2 (Beschichtungsstation) die Laserscanner-Systeme permanent die Außenkontur der zu beschichtenden Gegenstände 11 auf.

Die Daten der Laserscanner-Systeme werden über eine Steuereinrichtung 13 an die Positioniereinrichtung 10 übermittelt, welche bei der in den Zeichnungen schematisch gezeigten Beschichtungsanlage 1 ausgebildet ist, die von einer Positioniereinrichtung 10 getragenen oder andersartig positionierbaren Beschichtungspistolen 3 zumindest in der vertikalen (Z-Richtung) und/oder in der Y-Richtung zu positionieren und/oder ggf. auf in Förderrichtung auszulenken.

Insbesondere ist die Positioniereinrichtung 10 ausgebildet, in der Beschichtungsstation 2 die Beschichtungspistolen 3 individuell und laufend korrigierend vor dem zu beschichtenden Gegenstand 11 in der Beschichtungsstation 2 punktgenau zu positionieren. Das Resultat sind höchste Effizienz und optimale Beschichtungsergebnisse.

### Bezugszeichenliste

- 1: Beschichtungsanlage
- 2: Beschichtungsstation
- 3: Beschichtungspistole
- 4: Beschichtungsbereich
- 6: Einrichtung zum Erfassen der An- und/oder Abwesenheit eines zu beschichtenden Gegenstands
- 7: Überwachungsbereich der Einrichtung zum Erfassen der An- und/oder Abwesenheit
- 8: Einrichtung zum Erfassen einer Größe, Geometrie und/oder Kontur
- 9: Überwachungsbereich der Einrichtung zum Erfassen einer Größe, Geometrie und/oder Kontur
- 10: Positioniereinrichtung
- 11: Gegenstand
- 12: Fördervorrichtung
- 13: Steuereinrichtung
- 14: Laserstrahl des ersten Laserscanning-Systems/erster Laserstrahl
- 15: Laserstrahl des mindestens einen zweiten Laserscanning-Systems/zweiter Laserstrahl
- 16: Laserstrahl des mindestens einen zweiten Laserscanning-Systems/dritter Laserstrahl

## Patentansprüche

1. Anlage (1) zum vorzugsweise automatischen Beschichten von Gegenständen (11) mit Beschichtungsmaterial, insbesondere Beschichtungspulver, wobei die Anlage (1) Folgendes aufweist:
- eine Beschichtungsstation (2) mit mindestens einer Beschichtungspistole (3) zum insbesondere bedarfsweisen Versprühen von Beschichtungsmaterial in Richtung eines Beschichtungsbereichs (4);
- eine Fördervorrichtung (12) zum insbesondere kontinuierlichen Transportieren von zu beschichtenden Gegenständen (11) durch den Beschichtungsbereich (4); und
- eine Einrichtung (8) zum Erfassen einer Größe, Geometrie und/oder Kontur von mindestens einem Bereich eines zu beschichtenden Gegenstands (11) in einem - in Förderrichtung der Fördervorrichtung (12) gesehen - stromaufwärts der Beschichtungsstation (2) liegenden Überwachungsbereich (9) aufweist,
wobei der Beschichtungsstation (2) eine Positioniereinrichtung (10) zugeordnet ist zum insbesondere wahl- und/oder bedarfsweisen Positionieren der mindestens einen Beschichtungspistole (3) relativ zu dem Beschichtungsbereich (4), und wobei ferner eine Steuereinrichtung (13) vorgesehen ist, welche ausgebildet ist, in Abhängigkeit von der erfassten Größe, Geometrie und/oder Kontur des zu beschichtenden Gegenstands (11) und insbesondere zeitverzögert die Positioniereinrichtung (10) der Beschichtungsstation (2) anzusteuern,
**dadurch gekennzeichnet, dass**
die Einrichtung (8) zum Erfassen einer Größe, Geometrie und/oder Kontur von mindestens einem Bereich eines zu beschichtenden Gegenstands (11) ein erstes optisches Erfassungssystem in Gestalt mindestens eines ersten Laserscanning-Systems aufweist, welches ausgebildet ist, in dem Überwachungsbereich (9) den mindestens einen Bereich des zu beschichtenden Gegenstands (11) mit mindestens einem ersten Laserstrahl (14) abzutasten und/oder zu überstreichen, um diesen zu vermessen, wobei der mindestens eine erste Laserstrahl (14) des ersten Laserscanning-Systems in einer senkrecht oder zumindest im Wesentlichen senkrecht zu der Förderrichtung verlaufenden ersten Richtung relativ zu der Förderrichtung der Fördervorrichtung (12) verläuft, und dass die Einrichtung (8) zum Erfassen einer Größe, Geometrie und/oder Kontur von mindestens einem Bereich eines zu beschichtenden Gegenstands (11) mindestens ein zweites optisches Erfassungssystem insbesondere in Gestalt mindestens eines zweiten Laserscanning-Systems aufweist, welches ausgebildet ist, in dem Überwachungsbereich (9) der Einrichtung (8) zum Erfassen einer Größe, Geometrie und/oder Kontur insbesondere zeilen-oder rasterartig den mindestens einen Bereich des zu beschichtenden Gegenstands (11) mit mindestens einem zweiten Laserstrahl (15, 16) abzutasten und/oder zu überstreichen, um diesen zu vermessen, wobei der mindestens eine zweite Laserstrahl (15, 16) des mindestens einen zweiten optischen Erfassungssystems in einer zur ersten Richtung verschiedenen, schräg zu der Förderrichtung der Fördervorrichtung (12) verlaufenden zweiten Richtung relativ zu der Förderrichtung der Fördervorrichtung (12) verläuft.

2. Anlage (1) nach Anspruch 1,
wobei das mindestens eine erste Laserscanning-System insbesondere als ein polar messendes Laserscanning-System ausgeführt und ausgebildet ist, in dem Überwachungsbereich (9) in vertikaler Richtung zeilen- oder rasterartig den mindestens einen Bereich des zu beschichtenden Gegenstands (11) mit dem mindestens einem ersten Laserstrahl (14) abzutasten und/oder zu überstreichen.

3. Anlage (1) nach Anspruch 1 oder 2,
wobei das mindestens eine zweite optische Erfassungssystem mindestens ein zweites Laserscanning-System aufweist, welches ausgebildet ist, in dem Überwachungsbereich (7) der Einrichtung (8) zum Erfassen einer Größe, Geometrie und/oder Kontur insbesondere zeilen- oder rasterartig den mindestens einen Bereich des zu beschichtenden Gegenstands (11) mit mindestens einem zweiten Laserstrahl (15, 16) abzutasten und/oder zu überstreichen, um diesen zu vermessen, wobei der mindestens eine zweite Laserstrahl (15, 16) des mindestens einen zweiten Laserscanning-Systems in einem stumpfen Winkel relativ zu der Förderrichtung der Fördervorrichtung (12) verläuft; und/oder
wobei das mindestens eine zweite optische Erfassungssystem mindestens ein zweites Laserscanning-System aufweist, welches ausgebildet ist, in dem Überwachungsbereich (9) der Einrichtung (8) zum Erfassen einer Größe, Geometrie und/oder Kontur insbesondere zeilen- oder rasterartig den mindestens einen Bereich des zu beschichtenden Gegenstands (11) mit mindestens einem zweiten Laserstrahl (15, 16) abzutasten und/oder zu überstreichen, um diesen zu vermessen, wobei der mindestens eine zweite Laserstrahl (15, 16) des mindestens einen zweiten Laserscanning-Systems in einem spitzen Winkel relativ zu der Förderrichtung der Fördervorrichtung (12) verläuft.

4. Anlage (1) nach einem der Ansprüche 1 bis 3,
wobei das mindestens eine zweite Laserscanning-System insbesondere als ein polar messendes Laserscanning-System ausgeführt und ausgebildet ist, in dem Überwachungsbereich (9) in - zur Förderrichtung - schrägen Richtung den mindestens einen Bereich des zu beschichtenden Gegenstands (11) mit dem mindestens einen zweiten Laserstrahl (15, 16) zu überstreichen und/oder abzutasten.

5. Anlage (1) nach einem der Ansprüche 1 bis 4,
wobei die mindestens eine Beschichtungspistole (3) senkrecht oder zumindest im Wesentlichen senkrecht zu der Förderrichtung der Fördervorrichtung (12) ausgerichtet ist, und wobei die Positioniereinrichtung (10) ausgebildet ist, die mindestens eine Beschichtungspistole (3) relativ zu dem Beschichtungsbereich (4) senkrecht zu der Förderrichtung der Fördervorrichtung (12) horizontal zu bewegen; und/oder
wobei die Positioniereinrichtung (10) ausgebildet ist, die mindestens eine Beschichtungspistole (3) relativ zu dem Beschichtungsbereich (4) senkrecht zu der Förderrichtung der Fördervorrichtung (12) vertikal zu bewegen.

6. Anlage (1) nach einem der Ansprüche 1 bis 5,
wobei die Beschichtungsstation (2) eine Vielzahl von Beschichtungspistolen (3) aufweist, die vorzugsweise vertikal übereinander angeordnet sind, wobei die Beschichtungspistolen (3) jeweils in Richtung des Beschichtungsbereichs (4) ausgerichtet sind und relativ zueinander und relativ zu dem Beschichtungsbereich (4) horizontal und/oder vertikal bewegbar sind.

7. Anlage (1) nach einem der Ansprüche 1 bis 6,
wobei die Anlage (1) mindestens eine Beschichtungskabine oder Beschichtungszelle aufweist, wobei die Beschichtungsstation (2) zumindest bereichsweise im Inneren der mindestens eine Beschichtungskabine oder Beschichtungszelle angeordnet ist.

8. Verfahren zum vorzugsweise automatischen Beschichten von Gegenständen (11) mit Beschichtungsmaterial, insbesondere Beschichtungspulver, wobei das Verfahren folgende Verfahrensschritte aufweist:
- mit Hilfe einer Fördervorrichtung (12) wird mindestens ein zu beschichtender Gegenstand (11) entlang eines Transportwegs durch einen Beschichtungsbereich (4) einer Beschichtungsstation (2) gefördert, und zwar vorzugsweise mit einer konstanten Fördergeschwindigkeit; und
- in einem Überwachungsbereich (7), der auf dem Transportweg des mindestens einen zu beschichtenden Gegenstands (11) und - in Förderrichtung der Fördervorrichtung (12) gesehen - stromaufwärts des Beschichtungsbereichs (4) liegt, wird die An- oder Abwesenheit eines zu beschichtenden Gegenstands (11) erfasst;
wobei dann, wenn erfasst wird, dass in dem Überwachungsbereich (7) ein zu beschichtender Gegenstand (11) anwesend ist, in der Beschichtungsstation (2) insbesondere zeitverzögert und vorzugsweise mit einer von der Fördergeschwindigkeit und einem Abstand zwischen dem Überwachungsbereich (7) und dem Beschichtungsbereich (4) abhängigen Zeitverzögerung mit mindestens einer Beschichtungspistole (3) Beschichtungsmaterial in Richtung des Beschichtungsbereichs (4) versprüht wird; und
wobei dann, wenn erfasst wird, dass in dem Überwachungsbereich (7) kein zu beschichtender Gegenstand (11) anwesend ist, in der Beschichtungsstation (2) insbesondere zeitverzögert und vorzugsweise mit einer von der Fördergeschwindigkeit und einem Abstand zwischen dem Überwachungsbereich (7) und dem Beschichtungsbereich (4) abhängigen Zeitverzögerung mit der mindestens einen Beschichtungspistole (3) kein Beschichtungsmaterial in Richtung des Beschichtungsbereichs (4) versprüht wird.
**dadaurch gekennzeichnet, dass**
das Verfahren folgende Verfahrensschritte aufweist:
- in einem Überwachungsbereich (9), der auf dem Transportweg des mindestens einen zu beschichtenden Gegenstands (11) und - in Förderrichtung der Fördervorrichtung (12) gesehen - stromaufwärts des Beschichtungsbereichs (4) liegt, werden/wird eine Größe, Geometrie und/oder Kontur zumindest eines Bereichs eines zu beschichtenden Gegenstands (11) erfasst;
wobei mit Hilfe einer Positioniereinrichtung (10) in der Beschichtungsstation (2) insbesondere zeitverzögert und vorzugsweise mit einer von der Fördergeschwindigkeit und einem Abstand zwischen dem Überwachungsbereich (9) und dem Beschichtungsbereich (4) abhängigen Zeitverzögerung mindestens eine Beschichtungspistole (3) in horizontaler und/oder vertikaler Richtung und/oder in Förderrichtung derart mit Bezug zu dem Beschichtungsbereich (4) positioniert und/oder ausgerichtet wird, dass dann, wenn der zu beschichtende Gegenstand (11) durch den Beschichtungsbereich (4) gefördert wird, die mindestens eine Beschichtungspistole (3) stets einen vorab festgelegten oder festlegbaren Abstand und/oder eine vorab festgelegte oder festlegbare Ausrichtung zu der Oberfläche des zu beschichtenden Gegenstands (11) aufweist,
wobei die Größe, Geometrie und/oder Kontur des zumindest eines Bereichs des zu beschichtenden Gegenstands (11) durch zumindest bereichsweises Abtasten des Gegenstands (11) mit Hilfe mindestens eines ersten Laserstrahls (14), der senkrecht zu der Förderrichtung der Fördervorrichtung (12) verläuft, und mit Hilfe mindestens eines zweiten Laserstahls (15, 16), der schräg zu der Förderrichtung der Fördervorrichtung (12) verläuft, erfasst werden/wird.

## Claims

1. Installation (1) for preferably automatically coating objects (11) with coating material, in particular coating powder, wherein the installation (1) comprises the following:
- a coating station (2) having at least one coating gun (3) for spraying coating material, in particular as required, in the direction of a coating region (4);
- a conveying apparatus (12) for in particular continuously transporting objects (11) to be coated through the coating region (4); and
- a device (8) for capturing a size, geometry and/or contour of at least one region of an object (11) to be coated in a monitoring region (9) located - when viewed in the conveying direction of the conveying apparatus (12) - upstream of the coating station (2),
wherein the coating station (2) is assigned a positioning device (10) for positioning the at least one coating gun (3) relative to the coating region (4), in particular selectively and/or if required, and wherein furthermore a control device (13) is provided, which is configured to control the positioning device (10) of the coating station (2) in dependence on the captured size, geometry and/or contour of the object (11) to be coated and in particular with a time delay,
**characterized in that**
the device (8) for capturing a size, geometry and/or contour of at least one region of an object (11) to be coated has a first optical capture system in the form of at least one first laser scanning system, which is configured to scan and/or to sweep over the at least one region of the object (11) to be coated in the monitoring region (9) with at least one first laser beam (14) in order to measure the region, wherein the at least one first laser beam (14) of the first laser scanning system travels in a first direction perpendicular or at least substantially perpendicular to the conveying direction, relative to the conveying direction of the conveying apparatus (12), and **in that**
the device (8) for capturing a size, geometry and/or contour of at least one region of an object (11) to be coated has at least one second optical capture system in particular in the form of at least one second laser scanning system, which is configured to scan and/or to sweep over the at least one region of the object (11) to be coated in the monitoring region (9) of the device (8) for capturing a size, geometry and/or contour in particular line-by-line or in the manner of a grid with at least one second laser beam (15, 16) in order to measure the region, wherein the at least one second laser beam (15, 16) of the at least one second optical capture system travels in a second direction, which differs from the first direction and is at an angle to the conveying direction of the conveying apparatus (12), relative to the conveying direction of the conveying apparatus (12).

2. Installation (1) according to Claim 1,
wherein the at least one first laser scanning system is designed in particular as a polar measuring laser scanning system and is configured to scan and/or to sweep over the at least one region of the object (11) to be coated in the monitoring region (9) in the vertical direction line-by-line or in the manner of a grid with the at least one first laser beam (14).

3. Installation (1) according to Claim 1 or 2,
wherein the at least one second optical capture system has at least one second laser scanning system, which is configured to scan and/or to sweep over the at least one region of the object (11) to be coated in the monitoring region (7) of the device (8) for capturing a size, geometry and/or contour in particular line-by-line or in the manner of a grid with at least one second laser beam (15, 16) in order to measure the region, wherein the at least one second laser beam (15, 16) of the at least one second laser scanning system travels at an obtuse angle relative to the conveying direction of the conveying apparatus (12); and/or wherein the at least one second optical capture system has at least one second laser scanning system, which is configured to scan and/or to sweep over the at least one region of the object (11) to be coated in the monitoring region (9) of the device (8) for capturing a size, geometry and/or contour in particular line-by-line or in the manner of a grid with at least one second laser beam (15, 16) in order to measure the region, wherein the at least one second laser beam (15, 16) of the at least one second laser scanning system travels at an acute angle relative to the conveying direction of the conveying apparatus (12).

4. Installation (1) according to any of Claims 1 to 3,
wherein the at least one second laser scanning system is designed in particular as a polar measuring laser scanning system and is configured to sweep over and/or to scan the at least one region of the object (11) to be coated in the monitoring region (9) in the direction which is at an angle to the conveying direction with the at least one second laser beam (15, 16).

5. Installation (1) according to any of Claims 1 to 4,
wherein the at least one coating gun (3) is oriented perpendicularly or at least substantially perpendicularly to the conveying direction of the conveying apparatus (12), and wherein the positioning device (10) is configured to horizontally move the at least one coating gun (3) relative to the coating region (4) perpendicular to the conveying direction of the conveying apparatus (12); and/or
wherein the positioning device (10) is configured to vertically move the at least one coating gun (3) relative to the coating region (4) perpendicular to the conveying direction of the conveying apparatus (12).

6. Installation (1) according to any of Claims 1 to 5,
wherein the coating station (2) has a multiplicity of coating guns (3) which are preferably arranged vertically one above the other, wherein the coating guns (3) are each oriented in the direction of the coating region (4) and are horizontally and/or vertically movable relative to one another and relative to the coating region (4).

7. Installation (1) according to any of Claims 1 to 6,
wherein the installation (1) has at least one coating cabin or coating cell, wherein the coating station (2) is arranged at least partly in the interior of the at least one coating cabin or coating cell.

8. Method for preferably automatically coating objects (11) with a coating material, in particular coating powder, wherein the method comprises the following method steps:
- conveying at least one object (11) to be coated with the aid of a conveying apparatus (12) along a transport path through a coating region (4) of a coating station (2), specifically preferably at a constant conveying speed; and
- detecting the presence or absence of an object (11) to be coated in a monitoring region (7) which lies on the transport path of the at least one object (11) to be coated and - when viewed in the conveying direction of the conveying apparatus (12) - upstream of the coating region (4);
wherein, if the presence of an object (11) to be coated is detected in the monitoring region (7), coating material is sprayed with at least one coating gun (3) in the direction of the coating region (4) in the coating station (2) in particular with a time delay and preferably with a time delay that is dependent on the conveying speed and a distance between the monitoring region (7) and the coating region (4); and
wherein, if no presence of an object (11) to be coated is detected in the monitoring region (7), no coating material is sprayed with the at least one coating gun (3) in the direction of the coating region (4) in the coating station (2) in particular with a time delay and preferably with a time delay which is dependent on the conveying speed and a distance between the monitoring region (7) and the coating region (4),
**characterized in that**
the method comprises the following method step:
- capturing a size, geometry and/or contour of at least one region of an object (11) to be coated in a monitoring region (9) which lies on the transport path of the at least one object (11) to be coated and - when viewed in the conveying direction of the conveying apparatus (12) - upstream of the coating region (4);
wherein, in the coating station (2), in particular with a time delay and preferably with a time delay which is dependent on the conveying speed and a distance between the monitoring region (9) and the coating region (4), at least one coating gun (3) is positioned and/or oriented with the aid of a positioning device (10) in the horizontal and/or vertical direction and/or in the conveying direction with reference to the coating region (4) such that, if the object (11) to be coated is conveyed through the coating region (4), the at least one coating gun (3) always has a previously defined or definable distance and/or a previously defined or definable orientation relative to the surface of the object (11) to be coated,
wherein the size, geometry and/or contour of the at least one region of the object (11) to be coated are/is captured by way of at least partially scanning the object (11) with the aid of at least one first laser beam (14), which travels perpendicularly to the conveying direction of the conveying apparatus (12), and with the aid of at least one second laser beam (15, 16), which travels at an angle to the conveying direction of the conveying apparatus (12).

## Revendications

1. Installation (1) destinée à revêtir, de préférence automatiquement, des objets (11) avec un matériau de revêtement, en particulier une poudre de revêtement, l'installation (1) comprenant les éléments suivants :
- une station de revêtement (2) avec au moins un pistolet de revêtement (3) destiné, en particulier, à pulvériser en fonction des besoins un matériau de revêtement en direction d'une zone de revêtement (4) ;
- un dispositif de convoyage (12) destiné à transporter, en particulier en continu, des objets à revêtir (11) à travers la zone de revêtement (4) ; et
- un moyen (8) destiné à détecter une taille, une géométrie et/ou un contour d'au moins une zone d'un objet à revêtir (11) dans une zone de surveillance (9) se trouvant, dans une vue dans la direction de convoyage du dispositif de convoyage (12), en amont de la station de revêtement (2),
dans laquelle la station de revêtement (2) est associée à un moyen de positionnement (10) destiné à positionner, en particulier au choix et/ou selon les besoins, ledit au moins un pistolet de revêtement (3) relativement à la zone de revêtement (4), et dans laquelle il est prévu en outre un moyen de commande (13) qui est réalisé pour piloter le moyen de positionnement (10) de la station de revêtement (2), en fonction de la taille, de la géométrie et/ou du contour détecté(s) de l'objet à revêtir (11) et en particulier de manière différée,
**caractérisé en ce que**
le moyen (8) de détection d'une taille, d'une géométrie et/ou d'un contour d'au moins une zone d'un d'objet à revêtir (11) présente un premier système de détection optique ayant la forme au moins d'un premier système optique de scannage laser sous la forme d'au moins un premier système de scannage laser qui est réalisé pour palper et/ou balayer, dans la zone de surveillance (9), ladite au moins une zone de l'objet à revêtir (11) avec au moins un premier faisceau laser (14) pour la mesurer, ledit au moins un premier faisceau laser (14) du premier système de scannage laser s'étendant dans une première direction perpendiculaire ou au moins sensiblement perpendiculaire à la direction de convoyage relativement à la direction de convoyage du dispositif de convoyage (12), et **en ce que**
le moyen (8) de détection d'une taille, d'une géométrie et/ou d'un contour d'au moins une zone d'un d'objet à revêtir (11) présente au moins un second système optique de détection en particulier dans la forme au moins d'un second système de scannage laser qui est réalisé pour palper et/ou balayer, dans la zone de surveillance (9) du moyen (8) de détection d'une taille, d'une géométrie et/ou d'un contour, en particulier selon des lignes ou une grille, ladite au moins une zone de l'objet à revêtir (11) avec au moins un second faisceau laser (15, 16) pour la mesurer, ledit au moins un second faisceau laser (15, 16) dudit au moins un second système optique de détection s'étendant dans une seconde direction relativement à la direction de convoyage du dispositif de convoyage (12), s'étendant d'une manière différente par rapport à la première direction et inclinée par rapport à la direction de convoyage du dispositif de convoyage (12).

2. Installation (1) selon la revendication 1,
dans laquelle ledit au moins un premier système de scannage laser est ene particulier conçu et réalisé comme système de scannage laser de mesure polaire pour palper et/ou balayer, dans la zone de surveillance (9), ladite au moins une zone de l'objet à revêtir (11) dans une direction verticale selon des lignes ou une grille, avec ledit au moins un premier faisceau laser (14).

3. Installation (1) selon la revendication 1 ou 2,
dans laquelle ledit au moins un second système optique de détection présente au moins un second système de scannage laser qui est réalisé pour palper et/ou balayer, dans la zone de surveillance (7) du moyen (8) de détection d'une taille, d'une géométrie et/ou d'un contour, en particulier selon des lignes ou une grille, ladite au moins une zone de l'objet à revêtir (11) avec au moins un second faisceau laser (15, 16) pour la mesurer, ledit au moins un second faisceau laser (15, 16) dudit au moins un second système de scannage laser s'étendant sous un angle obtus relativement à la direction de convoyage du dispositif de convoyage (12) ; et/ou
dans laquelle ledit au moins un second système optique de détection présente au moins un second système de scannage laser qui est réalisé pour palper et/ou balayer, dans la zone de surveillance (9) du moyen (8) de détection d'une taille, d'une géométrie et/ou d'un contour, en particulier selon des lignes ou une grille, ladite au moins une zone de l'objet à revêtir (11) avec au moins un second faisceau laser (15, 16) pour la mesurer, ledit au moins un second faisceau laser (15, 16) dudit au moins un second système de scannage laser s'étendant sous un angle aigu relativement à la direction de convoyage du dispositif de convoyage (12).

4. Installation (1) selon l'une des revendications 1 à 3,
dans laquelle ledit au moins un second système de scannage laser est conçu et réalisé en particulier comme système de scannage laser à mesure polaire, pour balayer et/ou palper, dans la zone de surveillance (9), dans une direction inclinée par rapport à la direction de convoyage, ladite au moins une zone de l'objet à revêtir (11) avec au moins un second faisceau laser (15, 16).

5. Installation (1) selon l'une des revendications 1 à 4,
dans laquelle ledit au moins un pistolet de revêtement (3) est orienté de manière perpendiculaire ou au moins sensiblement perpendiculaire à la direction de convoyage du dispositif de convoyage (12), et dans laquelle le moyen de positionnement (10) est réalisé pour déplacer de manière horizontale ledit au moins un pistolet de revêtement (3) relativement à la zone de revêtement (4) perpendiculairement à la direction de convoyage du dispositif de convoyage (12) ; et/ou
dans laquelle le moyen de positionnement (10) est réalisé pour déplacer de manière verticale ledit au moins un pistolet de revêtement (3) relativement à la zone de revêtement (4) perpendiculairement à la direction de convoyage du dispositif de convoyage (12).

6. Installation (1) selon l'une des revendications 1 à 5,
dans laquelle la station de revêtement (3) présente une pluralité de pistolets de revêtement (3) qui sont agencés de préférence verticalement les uns au-dessus des autres, les pistolets de revêtement (3) étant chacun orientés en direction de la zone de revêtement (4) et pouvant être déplacés de manière horizontale et/ou verticale les uns relativement aux autres et relativement à la zone de revêtement (4).

7. Installation selon l'une des revendications 1 à 6,
dans laquelle l'installation (1) présente au moins une cabine de revêtement ou cellule de revêtement, la station de revêtement (2) étant agencée au moins en partie à l'intérieur de ladite au moins une cabine de revêtement ou cellule de revêtement.

8. Procédé pour revêtir des objets (11), de préférence automatiquement, avec un matériau de revêtement, en particulier une poudre de revêtement, le procédé comprenant les étapes suivantes :
- à l'aide d'un dispositif de convoyage (12), au moins un objet à revêtir (11) est convoyé le long d'un trajet de transport à travers une zone de revêtement (4) d'une station de revêtement (2), et ce, de préférence, avec une vitesse de convoyage constante ; et
- dans une zone de surveillance (7) qui se trouve sur le trajet de transport dudit au moins un objet à revêtir (11) et, dans une vue dans la direction de convoyage du dispositif de convoyage (12), en amont de la zone de revêtement (4), la présence ou l'absence d'un objet à revêtir (11) est détectée ;
dans lequel ensuite, quand il est détecté qu'un objet à revêtir (11) est présent dans la zone de surveillance (7), un matériau de revêtement est pulvérisé en direction de la zone de revêtement (4) dans la station de revêtement (2), en particulier de manière différée et de préférence d'une manière différée dépendante de la vitesse de convoyage et d'une distance entre la zone de surveillance (7) et la zone de revêtement (4), avec au moins un pistolet de revêtement (3) ; et
dans lequel ensuite, quand il est détecté qu'aucun objet à revêtir (11) n'est présent dans la zone de surveillance (7), aucun matériau de revêtement n'est pulvérisé en direction de la zone de revêtement (4) dans la station de revêtement (2), en particulier de manière différée et de préférence d'une manière différée dépendante de la vitesse de convoyage et d'une distance entre la zone de surveillance (7) et la zone de revêtement (4), avec ledit au moins un pistolet de revêtement (3),
**caractérisé en ce que**
le procédé présente les étapes suivantes :
- dans une zone de surveillance (9) qui se trouve sur le trajet de transport dudit au moins un objet à revêtir (11) et, dans une vue dans la direction de convoyage du dispositif de convoyage (12), en amont de la zone de revêtement (4), une taille, une géométrie et/ou un contour d'au moins une zone un objet à revêtir (11) est/sont détecté(s) ;
dans lequel, à l'aide d'un moyen de positionnement (10), dans la station de revêtement (2), au moins un pistolet de revêtement (3) est positionné et/ou orienté en particulier de manière différée et de préférence d'une manière différée dépendante d'une vitesse de convoyage et d'une distance entre la zone de surveillance (9) et la zone de revêtement (4), dans une direction horizontale et/ou verticale et/ou dans une direction de convoyage par rapport à la zone de revêtement (4) de telle sorte que, quand l'objet à revêtir (11) est convoyé à travers la zone de revêtement (4), ledit au moins un pistolet de revêtement (3) présente toujours une distance prédéterminée ou déterminable et/ou une orientation prédéterminée ou déterminable par rapport à la surface de l'objet à revêtir (11),
dans lequel la taille, la géométrie et/ou le contour de ladite au moins une zone de l'objet à revêtir (11) est/sont détectés par palpage, au moins en partie, de l'objet (11) à l'aide d'au moins un premier faisceau laser (14) qui s'étend parallèlement à la direction de convoyage du dispositif de convoyage (12), et d'au moins un second faisceau laser (15, 16) qui s'étend d'une manière inclinée par rapport à la direction de convoyage du dispositif de convoyage (12).
